# EUROPEAN PATENT APPLICATION

(11) **EP 3 816 051 A1**
(43) Date of publication of application: **05.05.2021**
(21) Application number: 20205263.5
(22) Date of filing: 02.11.2020
(51) Int. Cl.: B64D 25/14

(54) **INTEGRATED TRUSS RESTRAINT**

(30) Priority: 31.10.2019 US 201916670530
(71) Applicant: B/E Aerospace, Inc., Winston- Salem, NC 27105 (US)
(72) Inventor: HAYNES, Timothy C., Prescott Valley, AZ 86315 (US); HARTMAN, Drew, Phoenix, AZ 85085 (US)
(74) Representative: Dehns

(57) **Abstract**

A system may include an inflatable slide (100) having a head end (106), a toe end (108), a bottom side, and a top side. The system may further include a truss strap (304) attached to the bottom side of the inflatable slide near the toe end and the head end. The truss strap may extend longitudinally from the toe end to the head end when the inflatable slide is deployed. The truss strap may be configured to structurally support the inflatable slide. The truss strap may include an integrated yoke strap (306) attached to the truss strap. The integrated yoke strap may be configured to control unfurling of the inflatable slide during deployment of the inflatable slide.

## Description

### BACKGROUND

In the event of an aircraft evacuation, evacuation assemblies, such as evacuation slides, are often deployed to safely usher passengers from the aircraft to the ground. Emergency evacuation slides may be used to exit an aircraft absent a jet way or other means of egress for passengers. The evacuation system may deploy from a door sill or a side of the aircraft fuselage, for example. The slide deployment is typically controlled by restraints placed throughout the length of the slide which release in stages in response to internal slide pressure. Emergency evacuation slides may undergo a number of deployments during development, for example, during functional testing of slide deployment.

Wind conditions tend to be the biggest drivers of design for inflatable evacuation systems. Without needing to meet wind requirements, slides would just drop from the door unroll and inflate. In order to pass wind tests, slides are restrained to prevent the inflatable from being blown around by the wind resulting in unusable attitudes once fully inflated. Slides are typically restrained by means of a few restraints attached to the slide at fold locations and are designed to break at a certain loads. Once restraints break, the restraints allow the slide to inflate more volume which reduces the overall pressure in the slide momentarily, which can allow the slide to be blown by the wind, sometimes into unusable conditions even after the slide regains pressure.

### SUMMARY

In one aspect, embodiments of the inventive concepts disclosed herein are directed to a system. The system may include an inflatable slide having a head end, a toe end, a bottom side, and a top side. The system may further include a truss strap attached to the bottom side of the inflatable slide near the toe end and the head end. The truss strap may extend longitudinally from the toe end to the head end when the inflatable slide is deployed. The truss strap may be configured to structurally support the inflatable slide. The truss strap may include an integrated yoke strap attached to the truss strap. The integrated yoke strap may be configured to control unfurling of the inflatable slide during deployment of the inflatable slide.

In a further aspect, embodiments of the inventive concepts disclosed herein are directed to a method. The method may include providing an inflatable slide having a head end, a toe end, a bottom side, and a top side. The method may include attaching a truss strap to the bottom side of the inflatable slide near the toe end and the head end, the truss strap extending longitudinally from the toe end to the head end when the inflatable slide is deployed, the truss strap configured to structurally support the inflatable slide, the truss strap including at least one integrated yoke strap attached to the truss strap, the at least one integrated yoke strap configured to control unfurling of the inflatable slide during deployment of the inflatable slide.

### BRIEF DESCRIPTION OF THE DRAWINGS

Implementations of the inventive concepts disclosed herein may be better understood when consideration is given to the following detailed description thereof. Such description makes reference to the included drawings, which are not necessarily to scale, and in which some features may be exaggerated and some features may be omitted or may be represented schematically in the interest of clarity. Like reference numerals in the drawings may represent and refer to the same or similar element, feature, or function. In the drawings:
FIG. 1 illustrates a perspective view of a top side of an evacuation slide in a deployed position, in accordance with various embodiments.
FIG. 2 illustrates a perspective view of an evacuation slide in a stowed position, in accordance with various embodiments.
FIGS. 3A, 3B, 3C and 3D illustrate a releasable restraint aiding in retaining the inflatable slide in a folded position, in accordance with various embodiments.
FIG. 4 illustrates a view of a bottom side of an evacuation slide in a deployed position, in accordance with various embodiments.
FIG. 5 illustrates a view of a bottom side of an evacuation slide in a deployed position, in accordance with various embodiments.
FIG. 6 is a diagram of a method of some embodiments according to the inventive concepts disclosed herein.

### DETAILED DESCRIPTION

Before explaining at least one embodiment of the inventive concepts disclosed herein in detail, it is to be understood that the inventive concepts are not limited in their application to the details of construction and the arrangement of the components or steps or methodologies set forth in the following description or illustrated in the drawings. In the following detailed description of embodiments of the instant inventive concepts, numerous specific details are set forth in order to provide a more thorough understanding of the inventive concepts. However, it will be apparent to one of ordinary skill in the art having the benefit of the instant disclosure that the inventive concepts disclosed herein may be practiced without these specific details. In other instances, well-known features may not be described in detail to avoid unnecessarily complicating the instant disclosure. The inventive concepts disclosed herein are capable of other embodiments or of being practiced or carried out in various ways. Also, it is to be understood that the phraseology and terminology employed herein is for the purpose of description and should not be regarded as limiting.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only, and should not be construed to limit the inventive concepts disclosed herein in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of the "a" or "an" are employed to describe elements and components of embodiments of the instant inventive concepts. This is done merely for convenience and to give a general sense of the inventive concepts, and "a" and "an" are intended to include one or at least one and the singular also includes the plural unless it is obvious that it is meant otherwise.

Finally, as used herein any reference to "one embodiment," or "some embodiments" means that a particular element, feature, structure, or characteristic described in connection with the embodiment is included in at least one embodiment of the inventive concepts disclosed herein. The appearances of the phrase "in some embodiments" in various places in the specification are not necessarily all referring to the same embodiment, and embodiments of the inventive concepts disclosed may include one or more of the features expressly described or inherently present herein, or any combination of sub-combination of two or more such features, along with any other features which may not necessarily be expressly described or inherently present in the instant disclosure.

Broadly, embodiments of the inventive concepts disclosed herein are directed a method of creating and system of an inflatable slide having an integrated truss restraint.

In some embodiments, in an effort to prevent the loss of pressure in a head end of an inflatable slide and to produce smoother unfolding and inflation of the slide, the slide may include a restraint (e.g., a continuous restraint) along the whole length of the slide. In some embodiments, the continuous restraint along the whole length of the slide may be implemented as one or more traditional yoke restraint straps integrated with a truss strap. Yoke restraint straps have been used on inflatable slides in addition to truss strap assemblies. In some embodiments, by integrating the two to create a singular long restraint along the entire length of the slide may be restrained throughout a deployment allowing the head end to keep the pressure needed to remain rigid for the entire time and not become unusable do to wind and to prevent large changes in momentum during unfolding and/or inflation, which can happen using existing restraints and often causes the slide to buckle at the head end momentarily as the head end gets back up to pressure.

Some embodiments may allow for quicker development of new products and less expensive restraints. Additionally, some embodiments may allow for smoother dynamic deployments, which may allow for more consistent head end pressure resulting in better results. Further some embodiments may allow for a reduction in part numbers.

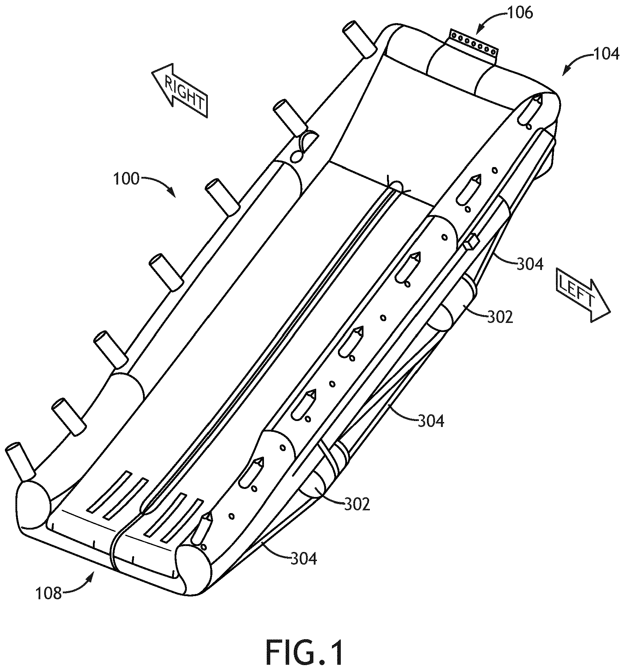

With reference to FIG. 1, an evacuation system 104 is illustrated, in accordance with various embodiments. Evacuation system 104 may comprise inflatable slide 100. Inflatable slide 100 may comprise a head end 106 and a toe end 108. Head end 106 may be coupled to aircraft structure. Inflatable slide 100 may comprise an inflatable slide. FIG. 1 illustrates inflatable slide 100 in an inflated and/or deployed position. Inflatable slide 100 may comprise a dual lane slide. However, inflatable slide 100 may comprise any number of lanes. Toe end 108 may contact an exit surface in response to inflatable slide 100 being deployed. In some embodiments, the inflatable slide 100 may include at least one truss strap 304 and at least one truss pillow 302 implemented on the bottom side of the inflatable slide 100.

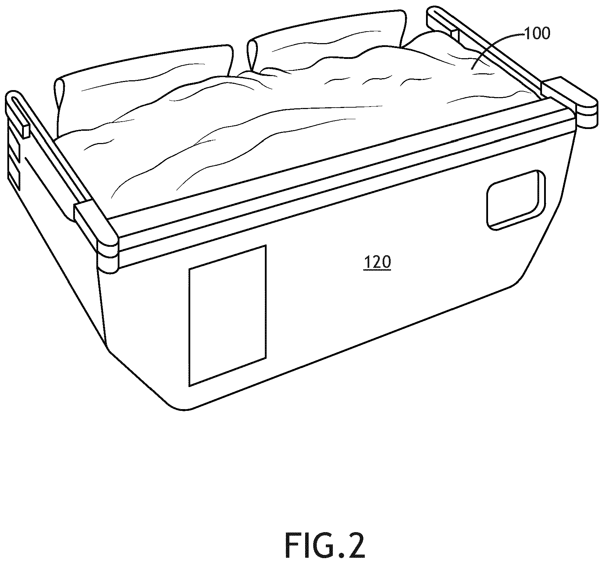

With reference to FIG. 2, inflatable slide 100 is illustrated in a stowed and/or packed position. In this regard, inflatable slide 100 may be stowed in a packboard 120. In various embodiments, inflatable slide 100 may be folded in the stowed position. In various embodiments, inflatable slide 100 may be deployed from packboard 120 in response to opening an emergency exit door. Packboard 120 may be coupled to an aircraft in an installed position. Typically, a packboard 120 includes a blow-out panel which opens in response to deployment of inflatable slide 100 through which opening the inflatable may exit the packboard. In this regard, inflatable slide 100 may be configured to be deployed from an aircraft.

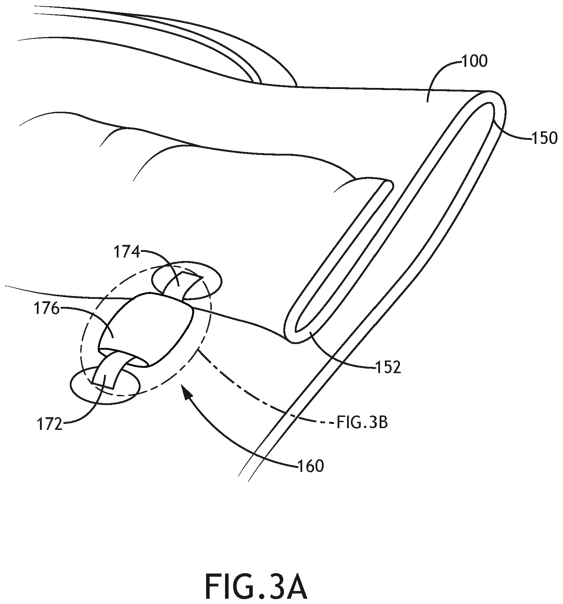

With reference to FIG. 3A, inflatable slide 100 is shown in a folded position, in accordance with various embodiments. For example, inflatable slide 100 may include a plurality of folds, including first fold 150 and second fold 152, when inflatable slide 100 is in the folded or stowed position. A releasable restraint 160 may aid in maintaining first fold 150 and/or second fold 152. Releasable restraint 160 may aid in a staged deployment of inflatable slide 100. Inflatable slide 100 may unfold in response to releasable restraint 160 decoupling.

In various embodiments, releasable restraint 160 may be configured to separate in response to an internal pressure in inflatable slide 100. For example, a gas cylinder may supply a flow of pressurized fluid to inflatable slide 100 in response to inflatable slide 100 being deployed. Inflatable slide 100 may begin to inflate and an internal pressure of inflatable slide 100 may increase. Releasable restraint 160 may maintain inflatable slide 100 in a folded position until the internal pressure has increased above a predetermined threshold value. Releasable restraint 160 may separate once the internal pressure of inflatable slide 100 has increased above the predetermined threshold value. Inflatable slide 100 may unfold in response to releasable restraint 160 separating. In this regard, inflatable slide 100 may fully deploy in response to releasable restraint 160 separating.

First strap 172 may be coupled between inflatable slide 100 and releasable restraint 160. Second strap 174 may be coupled between inflatable slide 100 and releasable restraint 160. In various embodiments, first strap 172 and/or second strap 174 may comprise a rope, tape, ribbon, webbing, or any other suitable strap. In various embodiments, first strap 172 and/or second strap 174 may comprise nylon, ballistic nylon, polypropylene, polyester, cotton, or any other suitable material. For example, first strap 172 and second strap 174 may comprise a nylon webbing. In various embodiments, a cover 176 may surround releasable restraint 160. Cover 176 may comprise one or more portions. Cover 176 may comprise a fabric, such as nylon, ballistic nylon, polypropylene, polyester, cotton, or any other suitable material.

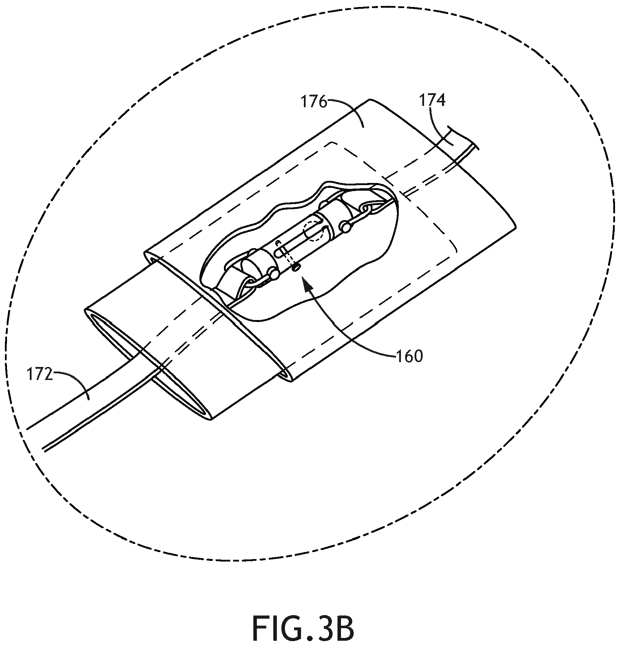

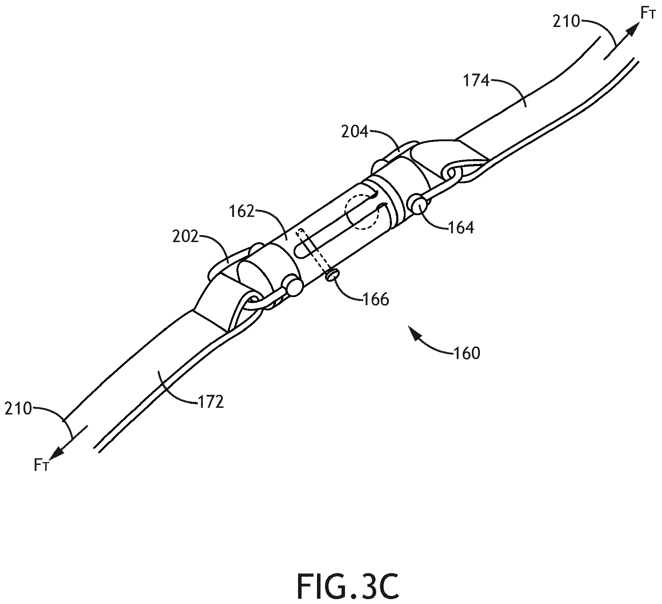

With reference to FIGS. 3B and 3C, releasable restraint 160, first strap 172 and second strap 174 are shown, in accordance with various embodiments. In various embodiments, releasable restraint 160 may include a first fastener 202 and a second fastener 204. First strap 172 may be coupled to releasable restraint 160 via first fastener 202. Second strap 174 may be coupled to releasable restraint 160 via second fastener 204. First fastener 202 and second fastener 204 may comprise shackles or the like.

In various embodiments, releasable restraint 160 may comprise a first mating portion 162, which may be a receptacle, and a second mating portion 164, which may be a protrusion or a boss. First mating portion 162 and second mating portion 164 may releasably couple together, for example, by snap fit, press fit, friction, spring or the like. First mating portion 162 may be a forked structure, pronged structure or other retention receptacle. Second mating portion 164 may be a hub, a boss, a button, hook, cantilever or the like. First mating portion 162 may be configured to receive second mating portion 164 to form a mechanical interlock.

In various embodiments, first mating portion 162 of releasable restraint 160 may comprise an adjustable receptacle having an adjustment fastener 166. Releasable restraint 160 with adjustment fastener 166 may provide a variable strength restraint where the resistance strength of releasable restraint 160 is adjusted or varied by manipulation of adjustment fastener 166. Releasable restraint 160 may resist a tensile force F_{T} (i.e., in a direction illustrated by arrows 210) until the tensile force F_{T} exceeds a threshold tensile force. In this regard, first mating portion 162 may decouple from second mating portion 164 in response to a tensile force F_{T} exceeding a threshold tensile force.

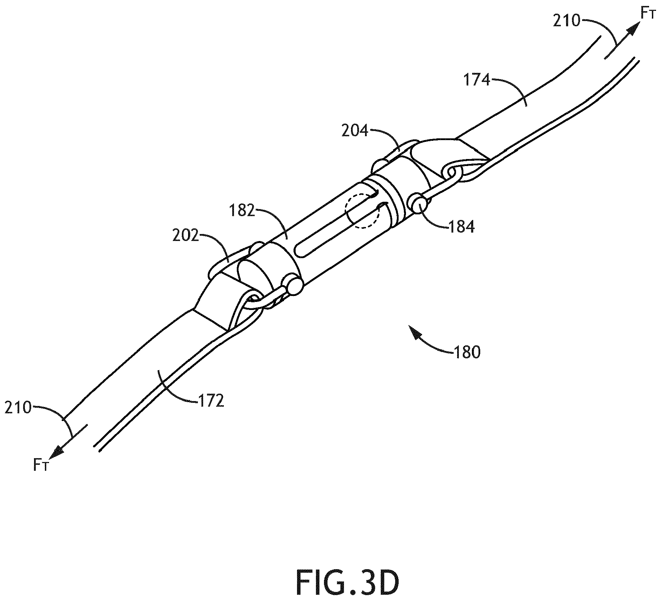

With reference to FIG. 3D, a releasable restraint 180 is shown, in accordance with various embodiments. Releasable restraint 180 may be similar to releasable restraint 160 but without an adjustment fastener 166. Similar to releasable restraint 160, releasable restraint 180 may be coupled to an inflatable slide 100 (FIGS. 1 and 2) by first strap 172 and second strap 174 and may be configured to separate in response to an internal pressure in inflatable slide 100. In various embodiments, releasable restraint 180 may comprise a first mating portion 182, which may be a receptacle, and a second mating portion 184, which may be a protrusion or a boss. First mating portion 182 and second mating portion 184 may releasably couple together, for example, by snap fit, press fit, friction, spring or the like. First mating portion 182 may be a forked structure, pronged structure or other retention receptacle. Second mating portion 184 may be a hub, a boss, a button, hook, cantilever or the like. First mating portion 182 may be configured to receive second mating portion 184 to form a mechanical interlock. Releasable restraint 180 may resist a tensile force F_{T} (i.e., in a direction illustrated by arrows 210) until the tensile force F_{T} exceeds a threshold tensile force. In this regard, first mating portion 182 may decouple from second mating portion 184 in response to a tensile force F_{T} exceeding a threshold tensile force.

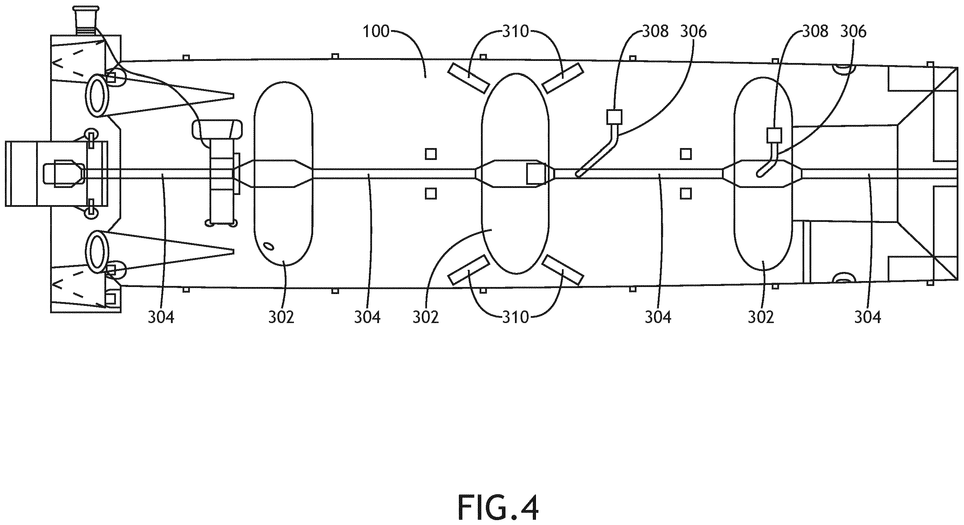

Referring now to FIG. 4, a view of a bottom side of the inflatable slide 100 in a deployed position of an exemplary embodiment according to the inventive concepts disclosed herein is depicted. The inflatable slide 100 may include at least one (e.g., one, as shown in FIG. 4) truss strap 304, at least one (e.g., three, as shown in FIG. 4) truss pillow 302, at least one (e.g., two, as shown in FIG. 4) integrated yoke strap 306, at least one (e.g., two, as shown in FIG. 4) yoke restraint 308, and/or at least one (e.g., three, as shown in FIG. 4) restraint 310.

The truss strap 304 may be attached to the bottom side of the inflatable slide 100 near the toe end 108 and the head end 106. The truss strap 304 may extend longitudinally from the toe end 108 to the head end 106 when the inflatable slide 100 is deployed. The truss strap 304 may be configured to structurally support the inflatable slide 100. For example, the truss strap 304 may be used to meet beam strength requirements for the inflatable slide 100. The truss strap 304 may include the at least one integrated yoke strap 306 attached to the truss strap 304. The at least one integrated yoke strap 306 may be configured to control unfurling of the inflatable slide during deployment of the inflatable slide. For example, the at least one integrated yoke strap 306 may be connected to the truss strap 304 and a bottom side(s) of one or more of longitudinal tubes (shown in FIG. 1) of the inflatable slide 100, such as to control unfurling of the inflatable slide 100 during deployment. For example, the at least one integrated yoke strap 306 may be two spaced-apart integrated yoke straps 306. In some embodiments, the truss strap 304 may extend longitudinally along a center of the bottom side of the inflatable slide 100 from the toe end 108 to the head end 106 when the inflatable slide 100 is deployed. In some embodiments, the truss strap 304 and the at least one integrated yoke strap 306 may collectively function as a restraint (e.g., a continuous restraint) along the whole length of the inflatable slide 100. While FIG. 4 exemplarily depicts a single truss strap 304, some embodiments may include any number of truss straps 304 with integrated yoke straps 306.

In some embodiments, each yoke restraint 308 may be coupled to the bottom side of the inflatable slide 100 and to at least one of the at least one yoke strap 306. In some embodiments, each yoke restraint 308 may be implemented similarly and function similarly to the releasable restraint 160, as described and illustrated herein with respect to FIGS. 3A-D.

In some embodiments, each truss pillow 302 may be positioned between the truss strap 304 and the bottom side of the inflatable slide 100 when the inflatable slide 100 is deployed. For example, the truss pillows 302 may be spaced-apart.

In some embodiments, the inflatable slide 100 may include at least one restraint strap 310 and restraints, which may be implemented similarly and function similarly to the releasable restraint 160 and associated restraint straps, as described and illustrated herein with respect to FIGS. 3A-D. The restraint straps 310 may be configured to control unfurling of the inflatable slide during deployment of the inflatable slide. For example, each of the at least one restraint may be coupled to the bottom side of the inflatable slide 100 and to one of the at least one restraint strap 310, wherein the at least one restraint may be configured to control an inflation sequence during deployment of the inflatable slide 100.

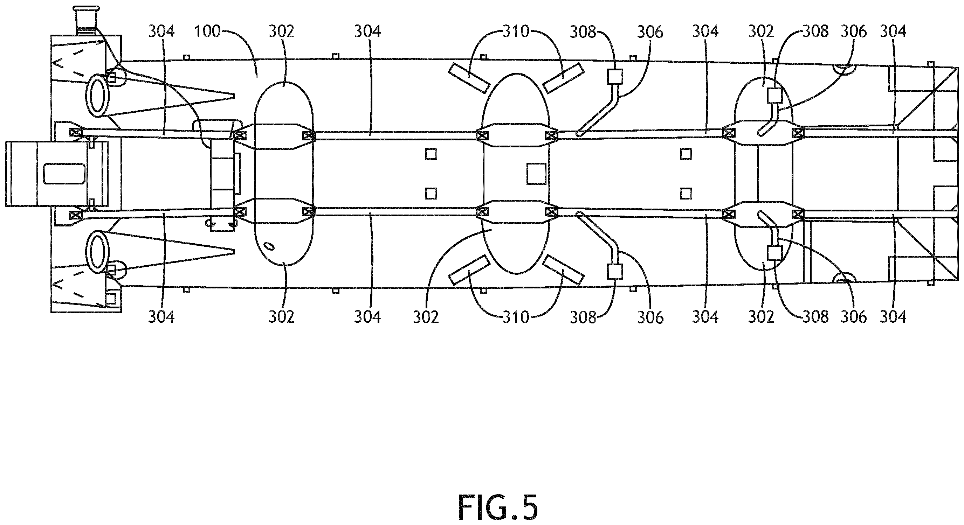

Referring now to FIG. 5, a view of a bottom side of the inflatable slide 100 in a deployed position of an exemplary embodiment according to the inventive concepts disclosed herein is depicted. The elements of FIG. 5 may be implemented similarly and function similarly to the elements of FIG. 4, except that the inflatable slide 100 of FIG. 5 includes two truss straps 304 with integrated yoke straps 306. For example, a first truss strap 304 may be parallel to a second truss strap 304.

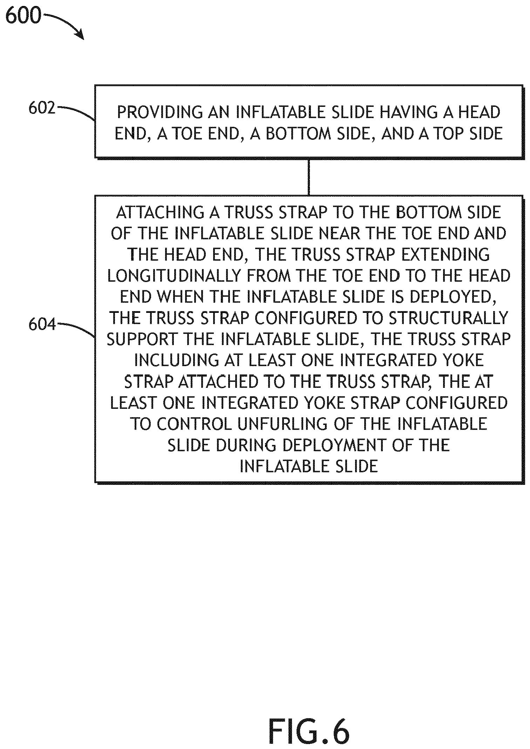

Referring now to FIG. 6, an exemplary embodiment of a method 600 according to the inventive concepts disclosed herein may include one or more of the following steps. Additionally, for example, some embodiments may include performing one more instances of the method 600 iteratively, concurrently, and/or sequentially. Additionally, for example, at least some of the steps of the method 600 may be performed in parallel and/or concurrently. Additionally, in some embodiments, at least some of the steps of the method 600 may be performed non-sequentially.

A step 602 may include providing an inflatable slide having a head end, a toe end, a bottom side, and a top side.

A step 604 may include attaching a truss strap to the bottom side of the inflatable slide near the toe end and the head end, the truss strap extending longitudinally from the toe end to the head end when the inflatable slide is deployed, the truss strap configured to structurally support the inflatable slide, the truss strap including at least one integrated yoke strap attached to the truss strap, the at least one integrated yoke strap configured to control unfurling of the inflatable slide during deployment of the inflatable slide.

Further, the method 600 may include any of the operations disclosed throughout.

As will be appreciated from the above, embodiments of the inventive concepts disclosed herein may be directed to a method of creating and system of an inflatable slide having an integrated truss restraint.

As used throughout, "at least one" means one or a plurality of; for example, "at least one" may comprise one, two, three, ..., one hundred, or more. Similarly, as used throughout, "one or more" means one or a plurality of; for example, "one or more" may comprise one, two, three, ..., one hundred, or more. Further, as used throughout, "zero or more" means zero, one, or a plurality of; for example, "zero or more" may comprise zero, one, two, three, ..., one hundred, or more.

In the present disclosure, the methods, operations, and/or functionality disclosed may be implemented as sets of instructions or software readable by a device. Further, it is understood that the specific order or hierarchy of steps in the methods, operations, and/or functionality disclosed are examples of exemplary approaches. Based upon design preferences, it is understood that the specific order or hierarchy of steps in the methods, operations, and/or functionality can be rearranged while remaining within the scope of the inventive concepts disclosed herein. The accompanying claims may present elements of the various steps in a sample order, and are not necessarily meant to be limited to the specific order or hierarchy presented.

It is to be understood that embodiments of the methods according to the inventive concepts disclosed herein may include one or more of the steps described herein. Further, such steps may be carried out in any desired order and two or more of the steps may be carried out simultaneously with one another. Two or more of the steps disclosed herein may be combined in a single step, and in some embodiments, one or more of the steps may be carried out as two or more sub-steps. Further, other steps or sub-steps may be carried in addition to, or as substitutes to one or more of the steps disclosed herein.

From the above description, it is clear that the inventive concepts disclosed herein are well adapted to carry out the objects and to attain the advantages mentioned herein as well as those inherent in the inventive concepts disclosed herein. While presently preferred embodiments of the inventive concepts disclosed herein have been described for purposes of this disclosure, it will be understood that numerous changes may be made which will readily suggest themselves to those skilled in the art and which are accomplished within the scope of the invention as defined by the claims.

## Claims

1. A system, comprising:
an inflatable slide (100) having a head end (106), a toe end (108), a bottom side, and a top side; and
a truss strap (304) attached to the bottom side of the inflatable slide near the toe end and the head end, the truss strap extending longitudinally from the toe end to the head end when the inflatable slide is deployed, the truss strap configured to structurally support the inflatable slide, the truss strap including at least one integrated yoke strap (306) attached to the truss strap, the at least one integrated yoke strap configured to control unfurling of the inflatable slide during deployment of the inflatable slide.

2. The system of claim 1, further comprising at least one yoke strap restraint (308), each of the at least one yoke strap restraint coupled to the bottom side of the inflatable slide and to at least one of the at least one integrated yoke strap.

3. The system of claim 1 or 2, further comprising at least one truss pillow (302) positioned between the truss strap and the bottom side of the inflatable slide when the inflatable slide is deployed.

4. The system of claim 3, wherein the at least one truss pillow comprises two spaced-apart truss pillows.

5. The system of any preceding claim, wherein the truss strap (304) extends longitudinally along a center of the bottom side of the inflatable slide from the toe end to the head end when the inflatable slide is deployed.

6. The system of claim 5, wherein the at least one integrated yoke strap comprises two spaced-apart integrated yoke straps.

7. The system of any preceding claim, wherein the truss strap is a first truss strap, further comprising a second truss strap, the second truss strap attached to the bottom side of the inflatable slide near the toe end and the head end, the second truss strap extending longitudinally from the toe end to the head end when the inflatable slide is deployed, the second truss strap configured to structurally support the inflatable slide, the second truss strap including at least one second integrated yoke strap attached to the second truss strap, the at least one second integrated yoke strap configured to control unfurling of the inflatable slide during deployment of the inflatable slide.

8. The system of claim 7, wherein the first truss strap and the second truss strap are parallel.

9. The system of claim 8, wherein the at least one integrated yoke strap comprises two spaced-apart integrated yoke straps.

10. The system of claim 9, wherein the at least one second integrated yoke strap comprises two spaced-apart second integrated yoke straps.

11. The system of any preceding claim, further comprising at least one restraint strap (310) configured to control unfurling of the inflatable slide during deployment of the inflatable slide.

12. The system of claim 11, further comprising at least one restraint, each of the at least one restraint coupled to the bottom side of the inflatable slide and to one of the at least one restraint strap, the at least one restraint configured to control an inflation sequence during deployment of the inflatable slide.

13. The system of claim 1, wherein the truss strap and the at least one integrated yoke strap collectively function as a restraint along a whole length of the inflatable slide.

14. A method, comprising:
providing an inflatable slide (100) having a head end (106), a toe end (108), a bottom side, and a top side; and
attaching a truss strap (304) to the bottom side of the inflatable slide near the toe end and the head end, the truss strap extending longitudinally from the toe end to the head end when the inflatable slide is deployed, the truss strap configured to structurally support the inflatable slide, the truss strap including at least one integrated yoke strap (306) attached to the truss strap, the at least one integrated yoke strap configured to control unfurling of the inflatable slide during deployment of the inflatable slide.
